Europäisches Patentamt

European Patent Office

Office européen des brevets

(11) Publication number: **0 068 387**
**B1**

(12) EUROPEAN PATENT SPECIFICATION

(45) Date of publication of patent specification: **26.03.86**

(51) Int. Cl.⁴: **F 16 C 32/00**

(21) Application number: **82105427.7**

(22) Date of filing: **21.06.82**

(54) **Fluid foil bearing.**

(30) Priority: **29.06.81 JP 101960/81**
**29.06.81 JP 101961/81**
**29.06.81 JP 101962/81**

(43) Date of publication of application:
**05.01.83 Bulletin 83/01**

(45) Publication of the grant of the patent:
**26.03.86 Bulletin 86/13**

(84) Designated Contracting States:
**CH FR GB LI NL**

(56) References cited:
**FR-A-2 330 279**
**FR-A-2 352 983**
**GB-A-2 055 430**
**US-A-3 884 534**
**US-A-4 099 799**
**US-A-4 195 395**
**US-A-4 223 958**
**US-A-4 225 196**
**US-A-4 262 975**

(73) Proprietor: **SHIMADZU CORPORATION**
**378, Ichinofunairi-cho Kawaramachi-dori Nijo**
**Sagaru**
**Nakagyo-ku Kyoto 604 (JP)**

(72) Inventor: **Hishikawa, Yasuo**
**27-9, Katsura Inuicho Nishikyo-ku**
**Kyoto (JP)**
Inventor: **Mitani, Hisashi**
**1-25, Kitakasugaoka Ibaraki**
**Osaka (JP)**
Inventor: **Ando, Masanao**
**Shimadzu Shuneiryo 18, Shunei-cho Saiin**
**Ukyo-ku Kyoto (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

## Description

This invention relates to a fluid foil bearing according to the precharacterizing portion of claim 1.

The US-A-4 223 958 discloses a fluid foil bearing comprising a single bearing foil sheet, that surrounds the shaft portion almost completely and includes circumferentially spaced supporting means, by which the single bearing foil is abutted against the interior surface of the housing.

This design causes a relatively rigid spring constant due to the integral construction of the structure of the spring system; extraordinary deviations of the shaft will hence rapidly result in surface contacts between the surface of the shaft and the surface of the single bearing foil, i.e. between moved and unmoved faces, accompanied by great wear.

In contrast thereto, the object underlying the subject matter of the invention consists in providing a fluid foil bearing that allows to largely prevent surface contacts between moved and unmoved faces.

According to the invention, this object is achieved by the features of the characterizing portion of claim 1.

Due to this structure of the fluid foil bearing, a shaft deviation leads at first to a swivelling of the supporting foils. As soon as the free lateral edge contacts the interior surface of the housing, the supporting foil is submitted to a deformation, in the course of which the surface contact between the single bearing foil and the supporting foil increases and surface contact between the supporting foil and the interior surface of the housing is effected. Up to this moment, contact exists only between unmoved faces, i.e. frictional wear does not occur during a comparatively long period. A surface contact between the inner face of the single bearing foil and the outer face of the shaft takes only place, if the deviation energy cannot be consumed by the swivelling and the deformation operations.

The FR-A 2 330 279 shows supporting foils, but they are in all cases arc-shaped and therefore not in a position to undergo the deformation needed to store and convert the indesired deviation energy.

An advantageous modification of the invention is defined in subclaim 2.

The invention will be described in detail with reference to the accompanying drawings, of which

Fig. 1 is a schematic perspective view of a pneumatic machine in which the fluid foil bearing of the invention may be used;

Fig. 2 is a transverse sectional view of one embodiment of the invention;

Fig. 2a is a view similar to Fig. 2 but showing a modified form of the bearing;

Fig. 3 is a perspective view of the single bearing foil used in the bearing of Figs. 2 and 2a;

Fig. 4 is a perspective view of one of the supporting foils used in the bearing of Figs. 2 and 2a;

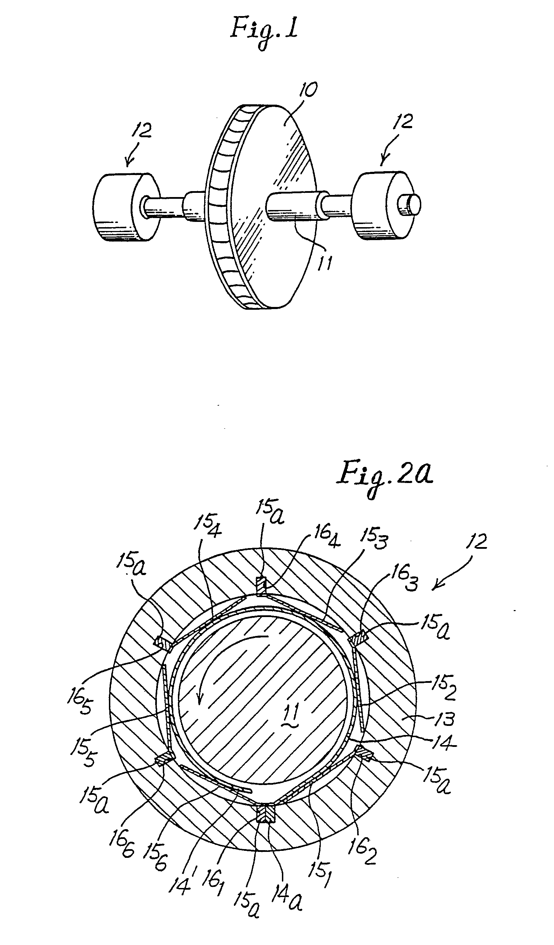

In Fig. 1 there is shown a turbine rotor 10 fixedly carried by a rotatable shaft 11 having opposite journals supported by a pair of fluid foil bearings 12. The two bearings are of the same construction, so that only one of them will be explained.

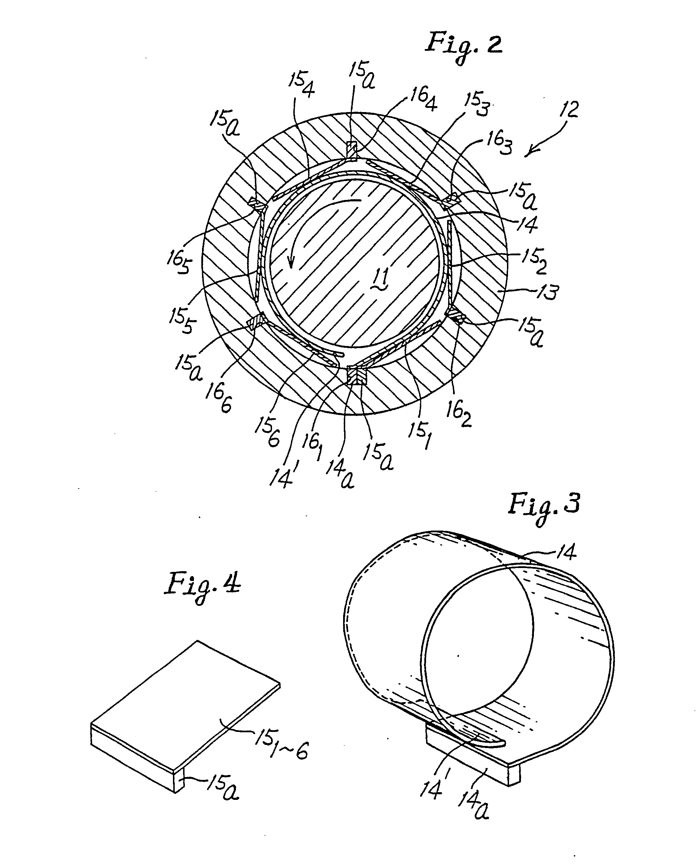

Fig. 2 shows the interior mechanism of the bearing 12 in transverse cross section, with the shaft 11 shown in the state or rotation.

The bearing 12 comprises a bearing housing 13, a single bearing foil 14 and six supporting foils $15_1$ to $15_6$. Since the six supporting foils $15_1$ to $15_6$ are of the same structure, they will be designated by 15 without the suffix when no discrimination is needed.

The housing 13 is mounted on a suitable fixed member or frame of the pneumatic machine, not shown.

The bearing foil 14 and the supporting foils 15 may be of any suitable material such as stainless steel having a suitable resiliency and a sufficient resistance to wear which would occur in fluid foil bearing operation. The bearing foil 14 has an elongated rectangular shape of a suitable size. An anchoring pin 14a of rectangular cross section is fixed to one side edge of the bearing foil 14 in any suitable known manner such as spot welding.

The housing 13 is formed in the interior surface thereof with six grooves $16_1 - 16_6$ extending a predetermined length in a direction parallel to the axis of the housing 13 and arranged at 60° spaced intervals circumferentially thereof. The groove $16_1$ is of a width greater than that of the other grooves $16_2 - 16_6$.

The anchoring pin 14a of the bearing foil 14 is fitted into the groove $16_1$ and extends therefrom counterclockwise in Fig. 2 substantially the whole circumference of the shaft 11 as far as it terminates in a free end 14' above and adjacent the anchoring pin 14a. The width of the bearing foil 14 longitudinal of the shaft 11 depends on the axial length of the journal of the shaft.

It should be noted that the illustrated relative dimensions of the parts or elements as well as those of the gaps or spaces in the figures do not represent the actual dimensions. In particular, the thickness of the foils and the distance of the gap or space between the foil or foils and the shaft or the interior surface of the housing are shown exaggerated only for simplicity and clarity of illustration.

The supporting foils $15_1$ to $15_6$ are of a rectangular or square shape having a shorter length than the bearing foil 14 in the circumferential direction of the shaft 11, and each of the supporting foils has its one edge fixed to an anchoring pin 15a similar to the anchoring pin 14a of the bearing foil 14. The supporting foils $15_1$ to $15_6$ are arranged around the bearing foil 14, with the anchoring pins 15a being detachably fitted into the corresponding grooves $16_1$ to $16_6$, so that the supporting foils resiliently support the bearing foil 14 at six positions sapced 60° apart from each other circumferentially of the bearing foil 14 or the shaft 11, thereby causing the bearing foil 14 to contact the shaft 11 with a suitable contact pressure or preload.

Although in the illustrated embodiment of Fig. 2 the anchoring pin 15a of the supporting foil $15_1$ is fitted into the same groove $16_1$ into which the anchoring pin 14a of the bearing foil 14 is fitted, the two pins 14a and 15a may be fitted into separate grooves.

In Fig. 2 the supporting foils $15_1$ to $15_6$ are so arranged in the housing 13 that they extend from their respective anchoring pins 15a counterclockwise that is, in the same direction as that of rotation of the shaft 11. The arrangement may also be such that the supporting foils extend from the anchoring pin clockwise, that is, in the direction opposite to that of rotation of the shaft as shown in Fig. 2a, wherein the same reference numerals as in Fig. 2 designate corresponding parts so that no further explanation will be needed.

As the shaft 11 is rotated counterclockwise as indicated by an arrow in Fig. 2 or 2a, the shaft 11 is in contact with the bearing foil 14 due to the preload caused by the supporting foils $15_1$ to $15_6$ until a predetermined rotational speed e.g. 1000 r.p.m. is reached, whereupon a dynamic pressure is produced in the six wedge-shaped spaces not shown but formed between the outer circumferential surface of the shaft 11 and the opposed inner circumferential surface of the bearing foil 14 to cause the shaft 11 to float within the space defined by the bearing foil 14, so that the shaft 11 can be rotated at a higher speed of e.g. 100,000 r.p.m.

While the shaft 11 is being rotated at a high speed, if an abnormal condition occurs to displace the shaft, the bearing foil 14 and the supporting foils $15_1$ to $15_6$ are displaced and/or deformed so that the bearing space between the shaft 11 and the bearing foil 14 is kept constant thereby to keep the bearing function stable and steady.

The preload on the shaft 11 provided by the supporting foils $15_1$ to $15_6$ is determined depending upon the masses of the shaft 11 and the rotor 10 of the turbine and the amount of load to be carried by the turbine. The preload can be adjusted or changed by changing the number of the supporting foils $15_1$ to $15_6$ provided (e.g. by providing five instead of six supporting foils with one supporting foil having been removed) or by changing the dimensions and/or material of the supporting foils thereby to change the stiffness or spring constant thereof.

Since there is provided only a single bearing foil 14, the number of the component parts of the bearing 12 is reduced, so that the whole structure of the bearing is simplified and made compact. The bearing foil 14 may have a desired thickness within a predetermined range, and the thickness need not be determined with a high degree of accuracy, with resulting easiness in making the foil. When the shaft 11 is displaced during rotation for one cause or another, the resilient supporting foils 15 allow the bearing foil 14 to be displaced and/or deformed to ensure a stable bearing function. Even the foreign bodies happen to be introduced into the bearing space, the dynamic pressure will not be reduced but kept substantially unchanged so that a stable bearing function is maintained.

By selecting the design of the supporting foils it is easily possible to provide a fluid foil bearing suitable for particular application. Since considerable tolerances are allowed in the design and dimensions of the foils, the fluid foil bearing of the invention is suitable for mass production. The bearing is free from thermal strain and suitable for high speed operation and can endure long use and improve the performance of the pneumatic machines in which the bearing is used.

## Claims

1. Fluid foil bearing comprising a housing (13) in which a portion of a rotatable shaft (11) is positioned, a single sheet bearing (14) of foil so arranged in said housing (13) as to surround substantially the whole circumference of said shaft portion (11) with a minute space interposed between said bearing foil (14) and said shaft portion (11), one side edge of said bearing foil (14) being anchored to the interior surface of said housing (13), said bearing foil (14) being resiliently supported on its outside at circumferentially spaced intervals by supporting means in said housing (13) so as to contact said single bearing foil (14) at circumferentially spaced intervals with a predetermined contact pressure thereby to provide a predetermined preload on said shaft (11), characterized in that said supporting means comprises a plurality of flat and straight resilient foils ($15_1$, $15_2$, $15_3$, $15_4$, $15_5$, $15_6$) arranged around said single bearing foil (14) and cantilevered at one end thereof to the interior surface of said housing (13) for generally tangential contact with said bearing foil (14), the other end of said foils ending in circumferential direction before the neighbouring foil begins.

2. Fluid foil bearing of claim 1, chracterized in that in a manner known per se the interior surface of the said housing (13) contains a plurality of axially extending grooves ($16_1$, $16_2$, $16_3$, $16_4$, $16_5$, $16_6$), circumferentially spaced at predetermined intervals, that each of said supporting foils ($15_1$, $15_2$, $15_3$, $15_4$, $15_5$, $15_6$) is provided on one side edge thereof with an anchoring pin (15a) detachably fitted into one of said grooves ($16_1$, $16_2$, $16_3$, $16_4$, $16_5$, $16_6$) and that the anchoring pin (14a) of said single bearing foil (14) is detachably fitted into one of said grooves ($16_1$) together with the anchoring pin (15a) of one of said supporting foils ($15_1$, $15_2$, $15_3$, $15_4$, $15_5$, $15_6$).

## Patentansprüche

1. Fluidblattlager mit einem Gehäuse (13), in dem ein Abschnitt einer drehbaren Welle (11) angeordnet ist, einem einzelnen Lagerblatt (14) aus Blattmetall, das derart in dem Gehäuse (13) angeordnet ist, daß es etwa den gesamten Umfang des Wellenabschnitts (11) umgibt, wobei zwischen dem Lagerblatt (14) und dem Wellenabschnitt (11) ein geringer Abstand vorhanden ist, ein Seitenrand des Lagerblatts (14) an der Innenfläche des Gehäuses (13) befestigt ist und das lagerblatt (14) in dem Gehäuse (13) auf seiner Außenseite in Umfangsrichtung Abstand aufweisenden Intervallen durch Lagerelemente elastisch gestützt ist, die das einzelne Lagerblatt (14) in in Umfangsrichtung Abstand aufweisenden Intervallen mit einem vorgegebenen Anlagedruck stützen und dadurch eine vorgegebene Vorbelastung auf dem Wellenabschnitt (11) zur Verfügung stellen, dadurch gekennzeichnet, daß die Lagerelemente eine Vielzahl flacher und gerader elastischer Metallblättchen (15$_1$, 15$_2$, 15$_3$, 15$_4$, 15$_5$, 15$_6$) aufweisen, die um das einzelne Lagerblatt (14) herum angeordnet sind und mit einem ihrer Enden an der Innenfläche des Gehäuses (13) gelagert sind, so daß sie etwa tangential in Anlage an das Lagerblatt (14) geraten, wobei die anderen Enden der Metallblättchen in Umfangsrichtung enden, bevor das benachbarte Metallblättchen beginnt.

2. Fluidblattlager nach Anspruch 1, dadurch gekennzeichnet, daß in an sich bekannter Weise die Innenfläche des Gehäuses (13) eine Vielzahl axial verlaufender Nuten (16$_1$, 16$_2$, 16$_3$, 16$_4$, 16$_5$, 16$_6$) aufweist, die im Abstand mit vorgegebenen Intervallen angeordnet sind, daß jedes der stützenden Metallblättchen (15$_1$, 15$_2$, 15$_3$, 15$_4$, 15$_5$, 15$_6$) an einem seiner Seitenränder mit einem Befestigungssteg (15a) versehen ist, der herausnehmbar in eine der Nuten (16$_1$, 16$_2$, 16$_3$, 16$_4$, 16$_5$, 16$_6$) eingesetzt ist, und daß der Befestigungssteg (14a) des einzelnen Lagerblatts (14) herausnehmbar in eine der Nute (16$_1$) gemeinsam mit dem Befestigungsstift (15a) eines der stützenden Metallblättchen (15$_1$, 15$_2$, 15$_3$, 15$_4$, 15$_5$, 15$_6$) eingepaßt ist.

**Revendications**

1. Parlier hydraulique à feuilles comportant un carter (13) dans lequel est positionnée une portion d'un arbre tournant (11), une seule feuille de palier (14) disposée dans le carter (13) de façon à entourer pratiquement toute la circonférence de cette portion d'arbre (11) en laissant subsister un très petit espace entre la feuille de palier (14) et la portion d'arbre (11), un bord latéral de cette feuille de palier (14) étant fixé sur la surface intérieure du carter (13), cette feuille de palier (14) étant élastiquement supportée, à des intervalles circonférentiellement espacés sur son extérieur, par des moyens porteurs dans le carter (13) de façon à entrer en contact avec cette seule feuille de palier (14) à des intervalles circonférentiellement espacés sous une pression de contact prédéterminée de façon à exercer une charge préalable prédéterminée sur l'arbre (11), caractérisé en ce que les moyens porteurs sont constitués par une multiplicité de feuilles élastiques plates et rectilignes (15$_1$, 15$_2$, 15$_3$, 15$_4$, 15$_5$, 15$_6$) disposées autour de la seule feuille de palier (14) et ayant une extrémité encastrée dans la surface intérieure du carter (13) pour venir en contact pratiquement tangentiel avec la feuille de palier (14), l'autre extrémité de ces feuilles (14) se terminant dans le sens circonférentiel avant que la feuille voisine ne commence.

2. Palier hydraudynamique à feuilles, caractérisé en ce que, d'une manière connue en soi, la surface intérieure du carter (13) comporte une multiplicité de rainures axiales (16$_1$, 16$_2$, 16$_3$, 16$_4$, 16$_5$, 16$_6$), circonférentiellement espacées à intervalles prédéterminés, en ce que chacune des feuilles porteuses (15$_1$, 15$_2$, 15$_3$, 15$_4$, 15$_5$, 15$_6$) comporte sur un bord latéral une clavette de fixation (15a) logée de façon amovible dans une de ces rainures (16$_1$, 16$_2$, 16$_3$, 16$_4$, 16$_5$, 16$_6$) et en ce que la clavette de fixation (14a) de la seule feuille de palier (14) est logée de façon amovible dans une de ces rainures (16$_1$) avec la clavette de fixation (15a) de l'une des feuilles porteuses (15$_1$, 15$_2$, 15$_3$, 15$_4$, 15$_5$, 15$_6$).

## Fig.1

## Fig.2a

*Fig. 2*

*Fig. 4*

*Fig. 3*